# EUROPEAN PATENT APPLICATION

(11) **EP 4 613 803 A1**
(43) Date of publication of application: **10.09.2025**
(21) Application number: 23885162.0
(22) Date of filing: 02.11.2023
(51) Int. Cl.: C08L 5/00, C08B 37/00, D01D 5/06

(54) **BIODEGRADABLE ELASTOMERS AND METHOD FOR OBTAINING SAME**

(30) Priority: 02.11.2022 ES 202230948
(71) Applicant: Consejo Superior De Investigaciones Científicas (CSIC), 28006 Madrid (ES)
(72) Inventor: PRIETO LÓPEZ, Cristina, 46980 Paterna (Valencia) (ES); LAGARÓN CABELLO, José María, 46980 Paterna (Valencia) (ES); GRUMI, Mattia, 46980 Paterna (Valencia) (ES); PARDO FIGUÉREZ, Maria de las Mercedes, 46980 Paterna (Valencia) (ES)
(74) Representative: Pons IP
(86) International application number: PCT/ES2023/070647
(87) International publication number: WO 2024/094911

(57) **Abstract**

The present invention relates to an elastomer material comprising cashew gum and, at least, another polymer, and a method for obtaining same based on an electro-hydrodynamic and/or aero-hydrodynamic processing of a previously prepared mixture of cashew gum and another polymer.

## Description

The present invention falls within the field of polymer materials. Specifically, the present invention relates to elastomer materials based on a polymer of natural origin, and a method for obtaining same by electro-hydrodynamic and/or aero-hydrodynamic processing.

### STATE OF THE ART

Elastomers are a group of polymers that exhibit properties such as high elasticity, viscoelasticity and glass transition temperature well below room temperature. The elasticity of these materials comes from the ability of long chains and covalent crosslinks to reconfigure themselves to distribute an applied stress at room temperature, ensuring that the elastomer will return to its original configuration when the stress ends.

Due to its specific mechanical, physical and chemical properties, elastomers are a versatile group of materials that have attracted a great deal of interest due to their applicability in many sectors, such as biomedical, textile, or agri-food, among others.

There are many examples of elastomer materials, and they can be classified as natural, such as latex, natural gum (also called Hevea gum), dandelion gum, guayule gum, and Eucommia Ulmoides gum, among others (Tang, S, Li, et al. Current trends in bio-based elastomer materials. SusMat.; 2: 2- 33 (2022)); and synthetics such as polyol polyester, polyisocyanate, ethylene and propylene copolymers, polyisobutylene, polysulphides and polysiloxane, styrene-butadiene rubber (SBR), acrylonitrile-butadiene copolymers (NBR), ethylene-vinyl copolymers (EVCL), polybutadiene, polychloroprene, among others (Aamer Ali Shah, et al., Biodegradation of natural and synthetic rubbers: A review, International Biodeterioration & Biodegradation: 83,145-157 (2013)).

Conventional methods of elastomer synthesis are mainly crosslinking and vulcanisation. The cross-linking process involves the formation of strong covalent bonds between the molecular chains. These bonds allow the elastomer to roll up on itself when at rest or at the end of a stress. The vulcanisation process consists of a process in which the polymer chains are interconnected by sulphur bridges. Nevertheless, this vulcanisation process is associated with environmental problems because it means that the materials produced are not easily biodegradable, in addition to the environmental pollution caused by their waste.

In the field of nanomaterials, techniques such as electrospinning have gained importance due to the simplicity of the process or the modulation of mechanical properties of the materials subjected to this process.

Padil et al., Electrospun fibers based on carbohydrate gum polymers and their multifaceted applications. Carbohydr Polym.;247:116705 (2020), describes the preparation of nanofibres based on different natural gums in combination with other polymers or nanoparticles by electrospinning. Among the rubbers used, commercial vegetable gums such as guar gum, gum arabic, karaya gum, gum kondagogu, gum tragacanth were found, as well as microbial gums such as xanthan gum, gellan gum, pullulan gum or dextran.

However, despite the promising nature of techniques such as electrospinning, not all natural polymers and rubbers can be effectively subjected to processes of this type or give rise to materials with elastomeric properties of interest.

Therefore, in light of the state of the art, there is a need for alternative elastomer materials that are biodegradable, as well as methods for obtaining them.

### DESCRIPTION OF THE INVENTION

The inventors have developed a biodegradable elastomer material comprising cashew gum and at least other polymer, as well as a method for obtaining same based on electro-hydrodynamic and/or aero-hydrodynamic processing.

The developed cashew gum material showed mechanical properties of interest, showing a high elongation at break, as well as a low Young's modulus, which is a key parameter in characterising the behaviour of an elastic material. These mechanical properties were observed for the elastomer cashew gum material arranged both in fibres (Table 1) and fibre yarns (Table 2).

Other polysaccharides of natural origin, such as gum arabic or xanthan gum, did not result in a material with elastomeric properties of interest, either because of an almost non-existent elastic recovery (Example 3) or because of the inability to produce fibres (Example 4).

Thus, the invention provides an alternative elastomer material, which has biodegradable properties due to its cashew gum composition, and a method for obtaining same, which will be described in detail below.

### Method of obtaining of the invention

In a first aspect, the present invention relates to a method for obtaining an elastomer material, comprising the following steps:
(a) preparing a mixture comprising cashew gum at a concentration between 0.01 and 99% w/v and, at least, one polymer, wherein the concentration of said polymer is between 0.01 and 80% w/v, preferably wherein said polymer is an ethylene polymer; and
(b) subjecting the mixture prepared in step (a) to an electro-hydrodynamic and/or aero-hydrodynamic process, obtaining an elastomer material.

The term "elastomer material" relates in the present invention to a polymer material which has a low Young's modulus and which can quickly recover its original state when released from an external stress. The elasticity of these materials comes from the ability of the microstructure of the material to reconfigure itself to distribute an applied stress at room temperature, ensuring that the elastomer will return to its original configuration when the stress ends. A characteristic of elastomer materials is that they have an estimated elongation at break between 100 and 10000%, preferably between 300 and 5000%. The elongation at break can be measured, for example, by the ASTM D638 standard method.

In the present invention, as mentioned above, the elastomer material comprises cashew gum. Cashew gum is a complex heteropolysaccharide, soluble in water, which can be extracted as an exudate from the *Anacardium occidentale* tree. Cashew gum is mainly composed of galactose, glucose, arabinose, rhamnose and glucuronic acid.

A first step, step a) of the method of obtaining the invention, comprises preparing a mixture comprising cashew gum at a concentration between 0.01 and 99% w/v (including the extreme values of the range) and, at least, one polymer, wherein the concentration of said polymer is between 0.01 and 80% w/v (including the extreme values of the range), preferably wherein said polymer is an ethylene polymer.

In the present invention, the mixture may be a solution, an emulsion or a suspension. Thus, in a preferred embodiment of the method of obtaining of the invention, the mixture prepared in step (a) is a solution, emulsion or suspension.

The term "solution" can be defined as a homogeneous mixture wherein one or more solutes are dissolved in a solvent. As understood by a person skilled in the art, homogenisation techniques or methods known in the prior art, such as magnetic stirring or by using homogenisers, may be used to prepare the solution. In a preferred embodiment of the method of obtaining of the invention, step (a) further comprises homogenising the mixture by magnetic stirring for 3 hours.

The term "emulsion", as used herein, relates to a dispersion of a liquid (dispersed phase) in the form of small particles within another liquid (continuous phase) with which it is generally immiscible. Emulsions can be direct, inverse or multiple. Direct emulsions are those in which the dispersed phase is a lipophilic substance and the continuous phase is hydrophilic. These emulsions are often called L/H or O/W. Inverse emulsions, on the other hand, are those in which the dispersed phase is a hydrophilic substance and the continuous phase is lipophilic. These emulsions are often called the abbreviation H/L or W/O. Multiple emulsions are those that, as a dispersed phase, contain an inverse emulsion and the continuous phase is an aqueous liquid. These emulsions are known as H/L/H or W/O/W. So-called Pickering emulsions can also be formulated that use particles to separate the phases and by means of any other type of emulsion technology.

The term "suspension", as used herein, relates to a heterogeneous mixture formed by small particles of a non-soluble solid dispersed in a liquid medium.

As mentioned, the mixture prepared in step a) comprises cashew gum and at least one polymer, preferably wherein said polymer is an ethylene polymer.

Examples of ethylene polymers (or ethylene-based polymers, terms used interchangeably throughout the present invention) include, but are not limited to, polyethylene, propylene, poly(ethylene oxide) (PEO), poly(ethylene-co-vinyl acetate) (EVA), polyethylene terephthalate (PET) and copolymers thereof.

In a preferred embodiment of the method of obtaining of the invention, alone or in combination with the other preferred embodiments, the polymer is an ethylene polymer selected from the list consisting of: polyethylene, propylene, poly(ethylene oxide), polyethylene-co-vinyl acetate, polyethylene terephthalate and copolymers thereof. More preferably, the ethylene polymer is poly(ethylene oxide).

Other polymers, both biodegradable and non-biodegradable, may be comprised in the mixture prepared in step a) of the method of obtaining of the invention.

Examples of biodegradable polymers include, but are not limited to, polyhydroxyalkanoates, such as polyhydroxybutyrate or polyhydroxybutyric acid (PHB), polyhydroxyvalerate (PHV), PHA (mcl-PHA), and all the possible copolymers thereof such as PHBV among others, poly-ε-caprolactone (PCL) and all the copolymers thereof such as PEG-PCL and PCLA, polylactic acid (PLA), all the copolymers thereof such as PGLA, polyphosphazenes, polyorthoesters, polyesters obtained starting from natural precursors such as polytrimethylene terephthalate (PTT), polybutylene terephthalate (PBT), polybutylene succinate (PBS), and all the possible copolymers thereof such as poly(butylene adipate-co-terephthalate) (PBAT), polyvinyl alcohols (PVOH) and the copolymers thereof with ethylene (EVOH), polyacrylates (PAC), polyacrylic acid (PAA), water-soluble polyacronitriles (PAN), lignin and derivatives such as sulfonated lignin (SL), acrylic/methacrylic ester polymers, pullulan, zein, celluloses such as ethylcellulose, hydroxypropyl cellulose, methyl cellulose, or hydroxypropylmethylcellulose, glycogen, starch and polymers derived from the same such as thermoplastic starch (TPS), among others.

Examples of non-biodegradable polymers include, but are not limited to, polyvinylpyrrolidone (PVP), silicones, polyesters, polyurethanes (PURs), polysulphones, halogenated polymers such as polyvinylidene fluoride (PVDF), polytetrafluoroethylene (PTFE) or polyvinylidene chloride (PVDC), polyvinylidene chloride (PVC), polycarbonates, acrylonitrile, butadiene, styrene, latex, polyimides, polysulphones and polyamides such as PA6, PA66, PA69, PA1010, thiolated polymers, polyanhydrides, and PAA polyethylene glycol copolymers (PAA-co-PEG), as well as mixtures of any of the above.

In another preferred embodiment of the method of obtaining of the invention, alone or in combination with the other preferred embodiments, the mixture prepared in step (a) comprises, at least, a polymer selected from the list consisting of: polyethylene, propylene, poly(ethylene oxide), poly(ethylene-co-vinyl acetate) (EVA), polyethylene terephthalate, PHB, PHV, PHA (mcl-PHA), PHBV, poly-ε-caprolactone (PCL), PEG-PCL, PCLA, PLA, PGLA, polyphosphazenes, polyorthoesters, PTT, PBT, PBS, poly(butylene adipate-co-terephthalate) (PBAT), PVOH, EVOH, PAC, PAA, PAN, lignin, sulphonated lignin, acrylic/methacrylic ester polymers, pullulan, zein, ethyl cellulose, hydroxypropyl cellulose, methyl cellulose, or hydroxypropylmethylcellulose, glycogen, starch, thermoplastic starch (TPS), PVP, silicone, PURs, polysulphones, PVDF, PTFE, PVDC, PVC, polycarbonates, acrylonitrile, butadiene, styrene, latex, polyimides, polysulphones, PA6, PA66, PA69, PA1010, thiolated polymers, polyanhydrides, PAA polyethylene glycol copolymers (PAA-co-PEG), and any combination thereof. The method of obtaining of the invention contemplates that the mixture comprises at least, two, three or more polymers, including any combination thereof.

In a preferred embodiment of the method of obtaining of the invention, alone or in combination with the other preferred embodiments, the concentration of cashew gum in the mixture is between 1 and 99% w/v and the concentration of polymer, preferably ethylene polymer, is between 0.01 and 80% w/v.

In another preferred embodiment of the method of obtaining of the invention, alone or in combination with the other preferred embodiments, the cashew gum:ethylene polymer ratio is between 99:1 and 20:80, and more preferably between 95:5 and 60:40. Even more preferably, the cashew gum:ethylene polymer ratio is between 90:10 and 80:20.

In another preferred embodiment, alone or in combination with the other preferred embodiments, the concentration of cashew gum and ethylene polymer (taken as the sum of the two) in the mixture prepared in step a) is between 1 and 90% w/v (including the extreme values of the range) and more preferably between 1 and 40% w/v (including the extreme values of the range).

Moreover, the mixture prepared in step (a) may additionally comprise other additives, which include, but are not limited to, plasticizers, surfactants or amphiphilic compounds used to modify surface tension, reinforcements, process additives, antioxidants, colourants and/or nano-reinforcements, among others. Thus, in a preferred embodiment of the method of obtaining of the invention, alone or in combination with the other preferred embodiments, the mixture prepared in step (a) further comprises, at least, an additive selected from the list consisting of: plasticiser, surfactant, reinforcement, process additive, antioxidant, colourant, nano-reinforcement, and any combination thereof.

Preferably, the mixture in step a) comprises, at least, a plasticiser. Examples of plasticisers, where "plasticiser" can be defined as compounds that increase the "free volume" between the polymer chains, thereby increasing the flexibility of the material, may include compounds such as acetylated monoglycerides, citrates such as triethyl citrate (TEC), trioctyl citrate (TOC), trihexyl citrate (THC), acetyl tributyl citrate (ATBC), and polyols such as glycerol, deep eutectic solvents (DES) and natural deep eutectic solvents (NADES) or combinations thereof. Thus, in another more preferred embodiment, alone or in combination with the other preferred embodiments, the plasticiser in step (a) is selected from the list consisting of: glycerol, acetylated monoglycerides, triethyl citrate (TEC), trioctyl citrate (TOC), trihexyl citrate (THC), acetyl tributyl citrate (ATBC), deep eutectic solvent (DES), natural deep eutectic solvent (NADES) and any combination thereof. More preferably the plasticiser is selected from the list consisting of glycerol, DES, NADES, and any combination thereof. Even more preferably, the plasticiser is glycerol.

In another even more preferred embodiment of the method of obtaining of the invention, alone or in combination with the other preferred embodiments, the mixture prepared in step (a) comprises a plasticiser in a concentration between 0.01% and 50% w/v (including the extreme values of the range), more preferably, its concentration is between 0.01% and 25% w/v (including the extreme values of the range), and even more preferably between 0.01 and 10% w/v (including the extreme values of the range).

In another more preferred embodiment, the plasticiser used is glycerol in a concentration between 0.01% and 25% w/v (including the extreme values of the range), more preferably, in a concentration between 0.01% and 7% w/v (including the extreme values of the range).

In another preferred embodiment, alone or in combination with the other preferred embodiments, the mixture prepared in step (a), further comprises an additive selected from the list consisting of surfactant, reinforcement, process additive, antioxidant, colourant, nano-reinforcement, and any combination thereof.

Examples of surfactants used to modify surface tension may include sorbitan esters and polysorbates (Span, Tween, TEGO), polyvinylpyrrolidone, polyglycerol, polyricinoleate, polyvinyl alcohol, CTAB (cetyltrimethylammonium bromide), hexadecyltrimethylammonium bromide (HDTMAB), Triton (t-octylphenoxypolyethoxyethanol), Lauryl betaine, Pluronic (poloxamers) and block copolymers. Thus, in another more preferred embodiment, alone or in combination with the other preferred embodiments, the surfactant is selected from the list consisting of Span, preferably Span 20, Tween, TEGO, polyvinylpyrrolidone, polyglycerol, polyricinoleate, polyvinyl alcohol, CTAB (cetyltrimethylammonium bromide), hexadecyltrimethylammonium bromide (HDTMAB), Triton (t-octylphenoxypolyethoxyethanol), Lauryl betaine, Pluronic (poloxamers) and block copolymers.

Examples of antioxidants include, but are not limited to, p-phenylenediamines, quinolines, phenols or henna, among others. Thus, in another more preferred embodiment, the antioxidant is selected from the list consisting of: p-phenylenediamines, quinolines, phenols and henna.

Examples of colourants include, but are not limited to, oxides, sulphides, hydroxides, chromates and other metal complexes, such as cadmium, zinc, titanium, lead and molybdenum, phthalocyanine, quinacridones, dioxazines, isoindolines, perylenes, flavantrones or anthraquinones, among others. Thus, in another more preferred embodiment, the colourant is selected from the list consisting of: phthalocyanine, quinacridones, dioxazines, isoindolines, perylenes, flavantrones, and anthraquinones.

Moreover, the use of reinforcements, including solid, liquid or gaseous reinforcements, can improve the technical properties of materials. The action of the reinforcements is determined by a variety of factors, including the shape and size of the filler particles, the amount of filling, its type and structure, or the characteristics of the interaction of the reinforcement particles with the elastomer material and other ingredients. Examples of reinforcements include, but are not limited to, carbon black, titanium dioxide, magnetite, calcium carbonate, silica and carbon nanotubes, among others. Thus, in another more preferred embodiment, the reinforcement is selected from the list consisting of: carbon black, titanium dioxide, magnetite, calcium carbonate, silica and carbon nanotube.

In another preferred embodiment, alone or in combination with the other preferred embodiments, the mixture prepared in step (a) further comprises, at least, an additive selected from the list consisting of: Span, preferably Span 20, Tween, TEGO, polyvinylpyrrolidone, polyglycerol, polyricinoleate, polyvinyl alcohol, CTAB (cetyltrimethylammonium bromide), hexadecyltrimethylammonium bromide (HDTMAB), Triton (t-octylphenoxypolyethoxyethanol), Lauryl betaine, Pluronic (poloxamers), p-phenylenediamines, quinolines, phenols, henna, phthalocyanine, quinacridones, dioxazines, isoindolines, perylenes, flavantrones, anthraquinones, carbon black, titanium dioxide, magnetite, calcium carbonate, silica, carbon nanotube, and any combination thereof.

In a more preferred embodiment, the additive is Span 20, wherein its concentration is less than 10% w/v, even more preferably, wherein its concentration is less than 5% w/v.

In an even more preferred embodiment, the mixture prepared in step (a), comprises a surfactant and, at least, a plasticiser, wherein the surfactant is Span 20 and the plasticiser is selected from the list consisting of glycerol, DES, NADES, and any combination thereof. More preferably, the mixture prepared in step (a) further comprises two additives, wherein the additives are Span 20 and glycerol. Even more preferably, the additives are Span 20 and glycerol, wherein the Span 20 concentration is less than 10% w/v and the glycerol concentration is between 0.01% and 25% w/v (including the extreme values of the range). Even more preferably, the additives are Span 20 and glycerol, wherein the Span 20 concentration of is less than 5% w/v and the glycerol concentration is between 0.01% and 7% w/v (including the extreme values of the range).

The invention envisages adding the additives encapsulated or in coaxial format in the elastomer material, to control its release speed. Thus, in another preferred embodiment, alone or in combination with the other preferred embodiments, the additives are added encapsulated or in coaxial format in the elastomer material.

A second step, step (b) of the method of obtaining of the invention, comprises subjecting the mixture prepared in step (a) to an electro-hydrodynamic or aero-hydrodynamic process, or a combination thereof, obtaining an elastomer material.

Electro-hydrodynamic processes are based on the use of electro-hydrodynamic techniques, which are based on the formation of micro, sub-micro or ultra-fine polymer fibres from a polymer solution to which an electric field is applied.

Examples of electro-hydrodynamic techniques include, but are not limited to, electrospinning, coaxial electrospinning, electro-hydrodynamic jet (E-jet) printing, electro-hydrodynamic direct writing, melt electrospinning, electrostatic-solution blow spinning, electrospraying, coaxial electrospraying, electrospraying assisted by pressurised gas. Thus, in a preferred embodiment, alone or in combination with the other preferred embodiments, the electro-hydrodynamic process comprises the use of an electro-hydrodynamic technique selected from the list consisting of electrospinning, *coaxial electrospinning, electro-hydrodynamic jet (E-jet) printing,* electro-hydrodynamic direct writing, melt electrospinning, electrostatic-solution blow spinning, electrospraying, *coaxial electrospraying,* electrospraying assisted by pressurised gas.

Aero-hydrodynamic processes are based on the use of aero-hydrodynamic techniques, which are based on the formation of micro, sub-micro or ultra-fine polymer fibres from a polymer solution to which a flow of pressurised air is applied through a jacket concentric to that of the solution.

Examples of aero-hydrodynamic techniques include, but are not limited to, centrifugal jet spinning, pull spinning, solution blow spinning, blown-centrifugal spinning, solution blow spraying. Thus, in a preferred embodiment, alone or in combination with the other preferred embodiments, the aero-hydrodynamic process comprises the use of an aero-hydrodynamic technique selected from the list consisting of: centrifugal jet spinning, *pull spinning, solution blow spinning,* blown-centrifugal spinning and solution blow spraying, more preferably solution blow spinning.

In a more preferred embodiment, alone or in combination with the other preferred embodiments, the electro-hydrodynamic process is electrospinning. Thus, in this more preferred embodiment of step b) of the method of obtaining of the invention, comprises subjecting the mixture prepared in step a) to an electrospinning process.

The term "electrospinning" can be defined as a type of electro-hydrodynamic technique based on the use of electrostatic forces, such as the voltage applied between an emitter and collector, promoting the formation of microfibres or nanofibres from polymer mixtures or solutions. Different parameters can condition the electrospinning process and its effects, such as, for example, parameters such as the voltage applied between the emitter and the collector, the flow rate of the solution, the distance between the emitter and collector, the temperature at which the process is carried out, relative humidity, as well as other parameters related to the polymer solution such as the concentration of solids, viscosity of the mixture or solution, surface tension or conductivity.

In the present invention, the process of electrospinning involves the use of either a single emitter or a multi-emitter or multiple emitters, including but not limited to emitter(s) with a monoaxial or coaxial structure. The present invention also contemplates, but is not limited to, the collection of fibres in a flat collector, a rotary collector, a disc-shaped collector, a ring collector, a roll-to-roll or layer-by-layer codeposition/deposition collector.

To carry out the electrospinning process, injectors can be used as emitters. The injector can be of different types depending on its configuration. Types of injectors include, but are not limited to, single, needle or capillary injector, coaxial injector, needle-less injectors, needle multi-injectors or similar or made of porous materials. In a preferred embodiment, alone or in combination with the other preferred embodiments, the electrospinning process comprises the use of a needle or capillary injector or a multi-needle or capillary injector.

In a preferred embodiment of the method of obtaining of the invention, alone or in combination with the other preferred embodiments, the electrospinning process comprises a voltage in the emitter between 0.01 kV and 500 kV (including the extreme values of the range), and a voltage in the collector between 0.01 kV and -500 kV (including the extreme values of the range). More preferably, the electrospinning process comprises a voltage in the emitter between 0.1 and 80 kV (including the extreme values of the range) and a voltage in the collector between -0.1 and -80 kV (including the extreme values of the range), preferably, a voltage in the emitter between 1 and 40 kV and a voltage in the collector between -1 and -40 kV.

In an even more preferred embodiment, the electrospinning process comprises a voltage in the emitter between 2 and 30 kV (including the extreme values of the range) and a voltage in the collector between -2 and -30 kV (including the extreme values of the range).

In another preferred embodiment, alone or in combination with the other preferred embodiments, the electrospinning process is carried out at a temperature between 1°C and 100°C, preferably at a temperature between 15°C and 60°C (including the extreme values of the range). More preferably, at a temperature between 20 and 45°C (including the extreme values of the range).

In another preferred embodiment, alone or in combination with the other preferred embodiments, the electrospinning process is carried out at a relative humidity between 1 and 90% (including the extreme values of the range), preferably at a relative humidity between 1 and 60% (including the extreme values of the range). Even more preferably, the electrospinning process is carried out at a relative humidity below 40%.

In another more preferred embodiment, alone or in combination with the other preferred embodiments, the electrospinning process is carried out at a temperature lower than or equal to 40°C and a relative humidity lower than or equal to 30%.

In another preferred embodiment, alone or in combination with the other preferred embodiments, the electrospinning process is carried out using a multi-emitter system, with more than one point of emission.

In another preferred embodiment, alone or in combination with the other preferred embodiments, the electrospinning process is carried out at a flow rate between 0.01 ml/min and 100 ml/min per emitter, and even more preferably, of between 0.001 ml/min and 10 ml/min per emitter.

In another preferred embodiment, alone or in combination with the other preferred embodiments, when the injector is used in scan mode, the electrospinning process is carried out with an injector speed between 1 and 1000 mm/s.

In another preferred embodiment of the electrospinning process, alone or in combination with the other preferred embodiments, the emitter-collector distance is between 0.1 and 5000 cm (including the extreme values of the range), more preferably, between 1 and 60 cm (including the extreme values of the range).

In another preferred embodiment of the electrospinning process, alone or in combination with the other preferred embodiments, the electrospinning process is carried out using a flat collector for fibre collection.

In another preferred embodiment of the electrospinning process, alone or in combination with the other preferred embodiments, the electrospinning process is carried out using a rotary collector for fibre collection wherein the speed of revolution is between 1 and 20000 rpm, and more preferably, between 1 and 5000 rpm.

In the present invention, fibres can be, but are not limited to, smooth or pearlescent. These terms relate to different types of morphology found in the fibrous structure generated. Thus, in a preferred embodiment, alone or in combination with the other preferred embodiments, the fibres obtained are smooth fibres. In another preferred embodiment, the fibres are pearlescent fibres.

The term "smooth fibres" relates to fibres that have a smooth surface with a rather regular cross section of the diameter. The term "pearlescent fibres" relates to fibres that have spherical, oblong or other irregular type beads or pearls, interspersed along the cross section of the fibre.

Furthermore, the fibres may be arranged in random or aligned orientation. In the random orientation, each fibre has a different orientation, while in the aligned orientation, all the fibres have the same orientation.

The elastomer material obtained in step b) of the method of obtaining of the invention may be the final product, or said material is be subjected to a post-processing step. Therefore, the method of obtaining of the invention may comprise an additional post-processing step c). Thus, a preferred embodiment of the method of obtaining of the invention, further comprises a step c) of post-processing of the elastomer material obtained in step b).

Depending on the post-processing, carried out in the above-mentioned step c), it is possible to obtain an elastomer material in the form of fibres, in the form of a film, in the form of yarns, or in the form of a rubber or elastic band.

In a preferred embodiment of step c) of the method of obtaining of the invention, the post-processing step comprises subjecting the elastomer material obtained in step b) to a calendering, annealing or heat treatment process with contact or without contact, preferably wherein said process is carried out at a temperature between 0 and 600°C (including the extreme values of the range), obtaining a homogeneous, porous-free elastomer material, preferably, obtaining an elastomer material in the form of film or fibres. More preferably, the calendering, annealing or heat treatment process with contact or without contact is carried out at a temperature between 0 and 200°C, more preferably between 10 and 90°C (including the extreme values of the range). In another preferred embodiment, the calendering, annealing or heat treatment process with contact or without contact is carried out at a speed between 0.001 and 100,000 rpm (including the extreme values of the range).

The term "calendering" relates to a preparation process of a material comprising the use of two or more rollers, with or without pressure, in which at least one of them is at a particular required temperature. This process allows the pores between the fibres to close, generating a porous-free continuous material with elastomeric properties.

The "annealing" of a material may be defined as a heat treatment at moderate temperatures optionally under pressure which produces a material with reduced porosity or continuous with improved physical properties from the fibres.

Contact or non-contact heat treatment includes, but is not limited to, continuous and discontinuous processes. Said heat treatment relates to a temperature chamber, such as an infrared camber, resistance camber, ultraviolet (UV) radiation camber, microwave camber, radio frequency camber, convection heating camber, induction heating camber, continuous conveyor dryers, vacuum dryers, through direct or indirect steam generators and any combination thereof. Thus, in a preferred embodiment, alone or in combination with the other preferred embodiments, the contact or non-contact heat treatment, comprises the use of a temperature chamber, or resistance chamber, or UV chamber, microwave camber, or radio frequency chamber, or convection heating chamber, or induction heating chamber, or continuous conveyor dryers, or vacuum dryers, or through direct or indirect steam generators, or any combination thereof.

In another preferred embodiment of step c) of the method of obtaining of the invention, the post-processing step comprises subjecting the elastomer material obtained in step b) to, at least, a spinning technique selected from the list consisting of: ring spinning, rotor spinning, twistless spinning, wrap spinning, core spinning, wet electrospinning coupled to a winding roller, centrifugal electrospinning, yarn production using a funnel-shaped collector and any combination thereof, obtaining an elastomer material in the form of yarns. The spinning technique can be carried out *in situ* during the formation of the elastomer material in step b), or off-line (where "off-line" can be defined as a separate step of the production chain). Thus, more preferably, the spinning technique is carried out *in situ* during the formation of the elastomer material in step b), or off-line.

The term "yarn" relates to a linear collection of filaments or fibres in a twisted or otherwise bound state, having good tensile strength and elastic properties. There is a wide variety of functional and design manufacturing possibilities that generate yarns with various physical characteristics and properties. The production of yarns such as, but not limited to, coarse, medium, fine or superfine yarns is contemplated.

The method of obtaining of the invention also contemplates cutting the fibres, or the mat of fibres obtained in a flat collector in small sections for spinning according to one or more of the above-mentioned spinning techniques.

In another preferred embodiment of step c) of the method of obtaining of the invention, the post-processing step comprises subjecting the elastomer material obtained in step b), preferably obtained by electrospinning, to an *in-situ* coupled yarn. More preferably, the electro-hydrodynamic process is coupled, preferably electrospinning, to the spinning, comprising the use of a system of two or more injectors and a rotary collection system, obtaining an elastomer material in the form of a yarn. In this preferred embodiment, the rotation of the plate causes the fibres obtained in step b) to intertwine and they can be fed in yarn form to a reel which starts winding them.

In another more preferred embodiment of the method of obtaining of the invention, when the post-processing step c) comprises subjecting the elastomer material obtained in step b) to, at least, a spinning technique, said step further comprises coating the yarn with fibres of another material and/or yarns. Examples of materials that can be used in said coating are any of the biodegradable polymers mentioned previously in this document.

In another more preferred embodiment, alone or in combination with the other preferred embodiments, the yarn obtained in step c), can be woven providing an elastomer material of a different shape, preferably said shape is selected from the list consisting of tape, laces and ropes.

In another preferred embodiment of step c) of the method of obtaining of the invention, the post-processing step comprises subjecting the elastomer material obtained in step b) to heat treatment and cutting, preferably wherein the heat treatment comprises annealing treatment; or to a spinning technique, preferably wherein the spinning technique is selected from the list consisting of: ring spinning, rotor spinning, twistless spinning, wrap spinning, core spinning, wet electrospinning coupled to a winding roller, centrifugal electrospinning, yarn production using a funnel-shaped collector and any combination thereof, followed by braiding and heat treatment, preferably wherein the heat treatment comprises annealing treatment, obtaining an elastomer material in the form of a rubber or elastic band, or precursors thereof.

Preferably, the elastomer material obtained in step b) is subjected to annealing treatment and subsequent cutting, obtaining rubber or elastic bands, or precursors thereof.

### Elastomer material of the invention

In a second aspect, the invention relates to an elastomer material, hereinafter the "elastomer material of the invention", comprising cashew gum and, at least, one polymer, preferably wherein said polymer is an ethylene polymer.

The terms "elastomer material" and "cashew gum" have been previously defined and explained in the previous aspect of the invention, also being applicable to the present aspect of the invention.

Examples of ethylene polymers (or ethylene-based polymers, terms that can be used interchangeably) include, but are not limited to, polyethylene, propylene, poly(ethylene oxide), polyethylene-co-vinyl acetate, polyethylene terephthalate and copolymers thereof.

Thus, in a preferred embodiment of the elastomer material of the invention, alone or in combination with the other preferred embodiments, the polymer is an ethylene polymer selected from the list consisting of: polyethylene, propylene, poly(ethylene oxide), polyethylene-co-vinyl acetate, polyethylene terephthalate and any copolymers thereof. More preferably, the ethylene polymer is poly(ethylene oxide).

Other polymers, both biodegradable and non-biodegradable, may be comprised in the elastomer material of the invention.

Examples of biodegradable polymers include, but are not limited to, polyhydroxyalkanoates, such as polyhydroxybutyrate or polyhydroxybutyric acid (PHB), polyhydroxyvalerate (PHV), PHA (mcl-PHA), and all the possible copolymers thereof such as PHBV among others, poly-ε-caprolactone (PCL) and all the copolymers thereof such as PEG-PCL and PCLA, polylactic acid (PLA), all the copolymers thereof such as PGLA, polyphosphazenes, polyorthoesters, polyesters obtained starting from natural precursors such as polytrimethylene terephthalate (PTT), polybutylene terephthalate (PBT), polybutylene succinate (PBS), and all the possible copolymers thereof such as poly(butylene adipate-co-terephthalate) (PBAT), polyvinyl alcohols (PVOH) and the copolymers thereof with ethylene (EVOH), polyacrylates (PAC), polyacrylic acid (PAA), water-soluble polyacronitriles (PAN), lignin and derivatives such as sulfonated lignin (SL), acrylic/methacrylic ester polymers, pullulan, zein, celluloses such as ethylcellulose, hydroxypropyl cellulose, methyl cellulose, or hydroxypropylmethylcellulose, glycogen, starch and polymers derived from the same such as thermoplastic starch (TPS), among others.

Examples of non-biodegradable polymers include, but are not limited to, polyvinylpyrrolidone (PVP), silicones, polyesters, polyurethanes (PURs), polysulphones, halogenated polymers such as polyvinylidene fluoride (PVDF), polytetrafluoroethylene (PTFE) or polyvinylidene chloride (PVDC), polyvinylidene chloride (PVC), polycarbonates, acrylonitrile, butadiene, styrene, latex, polyimides, polysulphones and polyamides such as PA6, PA66, PA69, PA1010, thiolated polymers, polyanhydrides, and PAA polyethylene glycol copolymers (PAA-co-PEG), as well as mixtures of any of the above.

In another preferred embodiment of the elastomer material of the invention, alone or in combination with the other preferred embodiments, the elastomer material comprises, at least, a polymer selected from the list consisting of: polyethylene, propylene, poly(ethylene oxide) (PEO), poly(ethylene-co-vinyl acetate) (EVA), polyethylene terephthalate (PET), PHB, PHV, PHA (mcl-PHA), PHBV, poly-ε-caprolactone (PCL), PEG-PCL, PCLA, PLA, PGLA, polyphosphazenes, polyorthoesters, PTT, PBT, PBS, poly(butylene adipate-co-terephthalate) (PBAT), polyvinyl alcohols (PVOH), copolymers of polyvinyl alcohols with ethylene (EVOH), PAC, polyacrylic acid (PAA), water-soluble polyacronitriles (PAN), lignin, sulphonated lignin (LS), acrylic/methacrylic ester polymers, pullulan, zein, ethyl cellulose, hydroxypropyl cellulose, methyl cellulose, or hydroxypropylmethylcellulose, glycogen, starch, thermoplastic starch (TPS), PVP, silicone, PURs, polysulphones, PVDF, PTFE, PVDC, PVC, polycarbonates, acrylonitrile, butadiene, styrene, latex, polyimides, polysulphones, PA6, PA66, PA69, PA1010, thiolated polymers, polyanhydrides, PAA polyethylene glycol copolymers (PAA-co-PEG), and any combination thereof. The elastomer material of the invention may comprise, at least, two, three or more polymers, including any combination thereof.

Moreover, the elastomer material of the invention may further comprise additives, which include, but are not limited to, plasticizers, surfactants or amphiphilic compounds used to modify surface tension, reinforcements, process additives, antioxidants, colourants or nano-reinforcements, among others.

Examples of plasticisers, which are compounds that increase the "free volume" between the polymer chains, thereby increasing the flexibility of the material, could include compounds such as acetylated monoglycerides, citrates such as triethyl citrate (TEC), trioctyl citrate (TOC), trihexyl citrate (THC), acetyl tributyl citrate (ATBC), and polyols such as glycerol, deep eutectic solvents (DES) and natural deep eutectic solvents (NADES) or combinations thereof.

Examples of amphiphilic compounds used to modify surface tension could include sorbitan esters and polysorbates (Span, Tween, TEGO), polyvinylpyrrolidone, polyglycerol, polyricinoleate, polyvinyl alcohol, CTAB (cetyltrimethylammonium bromide), hexadecyltrimethylammonium bromide (HDTMAB), Triton (t-octylphenoxypolyethoxyethanol), Lauryl betaine, Pluronic (polaxomers) and block copolymers.

Examples of antioxidants include, but are not limited to, p-phenylenediamines, quinolines, phenols or henna, among others. Examples of colourants include, but are not limited to, oxides, sulphides, hydroxides, chromates and other metal complexes, such as cadmium, zinc, titanium, lead and molybdenum, phthalocyanine, quinacridones, dioxazines, isoindolines, perylenes, flavantrones or anthraquinones, among others.

Examples of reinforcements, without limitation, are carbon black, titanium dioxide, magnetite, calcium carbonate, silica and carbon nanotubes, among others.

Thus, in a preferred embodiment, alone or in combination with the other preferred embodiments, the elastomer material of the invention further comprises, at least, an additive selected from the list consisting of: plasticiser, surfactant, reinforcement, process additive, antioxidant, colourant, nano-reinforcement, and any combination thereof. Preferably, the elastomer material of the invention comprises, at least, a plasticiser, and at least one other additive selected from the list consisting of surfactant, reinforcement, process additive, antioxidant, colourant, nano-reinforcement, and any combination thereof.

In a more preferred embodiment, alone or in combination with the other preferred embodiments, the plasticiser is selected from the list consisting of: acetylated monoglycerides, triethyl citrate (TEC), trioctyl citrate (TOC), trihexyl citrate (THC), acetyl tributyl citrate (ATBC), glycerol, deep eutectic solvent (DES), and natural deep eutectic solvent (NADES).

In another more preferred embodiment, alone or in combination with the other preferred embodiments, the surfactant is selected from the list consisting of: Span, preferably Span 20, Tween, TEGO, polyvinylpyrrolidone, polyglycerol, polyricinoleate, polyvinyl alcohol, CTAB (cetyltrimethylammonium bromide), hexadecyltrimethylammonium bromide (HDTMAB), Triton (t-octylphenoxypolyethoxyethanol), Lauryl betaine, Pluronic (poloxamers), and block copolymers.

In another more preferred embodiment, alone or in combination with the other preferred embodiments, the reinforcement is selected from the list consisting of: carbon black, titanium dioxide, magnetite, calcium carbonate, silica and carbon nanotube.

In another more preferred embodiment, alone or in combination with the other preferred embodiments, the antioxidant is selected from the list consisting of: p-phenylenediamines, quinolines, phenols and henna.

In another more preferred embodiment, alone or in combination with the other preferred embodiments, the colourant is selected from the list consisting of: phthalocyanine, quinacridones, dioxazines, isoindolines, perylenes, flavantrones, and anthraquinones.

Therefore, the elastomer material of the invention, may comprise one or more of the above-mentioned additives, including any combination thereof. In another preferred embodiment, alone or in combination with the other preferred embodiments, the elastomer material of the invention further comprises, at least, an additive selected from the list consisting of Span, preferably Span 20, Tween, TEGO, polyvinylpyrrolidone, polyglycerol, polyricinoleate, polyvinyl alcohol, CTAB (cetyltrimethylammonium bromide), hexadecyltrimethylammonium bromide (HDTMAB), Triton (t-octylphenoxypolyethoxyethanol), Lauryl betaine, Pluronic (polaxomers), block copolymer, acetylated monoglycerides, triethyl citrate (TEC), trioctyl citrate (TOC), trihexyl citrate (THC), acetyl tributyl citrate (ATBC), glycerol, deep eutectic solvent (DES), natural deep eutectic solvent (NADES), p-phenylenediamines, quinolines, phenols, henna, phthalocyanine, quinacridones, dioxazines, isoindolines, perylenes, flavantrones, anthraquinones, carbon black, titanium dioxide, magnetite, calcium carbonate, silica, carbon nanotube, and any combination thereof.

In an even more preferred embodiment, the elastomer material of the invention comprises a plasticiser and at least one surfactant, wherein the plasticiser is selected from the list consisting of glycerol, DES, NADES, and any combination thereof and the surfactant is Span 20. More preferably, the elastomer material of the invention comprises two additives, wherein the additives are Span 20 and glycerol.

In a preferred embodiment, alone or in combination with the other preferred embodiments, the additives are encapsulated or in coaxial format in the elastomer material of the invention.

The elastomer material of the invention can be obtained by an electro-hydrodynamic technique, an aero-hydrodynamic technique or any combination of the two. Thus, in a preferred embodiment, the elastomer material of the invention is obtained by means of an electro-hydrodynamic and/or aero-hydrodynamic technique.

In another preferred embodiment, the elastomer material of the invention is obtained by a fibre production process, more preferably centrifugal jet spinning.

In another preferred embodiment, alone or in combination with the other preferred embodiments, the elastomer material is obtained by an electro-hydrodynamic technique. In a more preferred embodiment, alone or in combination with the other preferred embodiments, the electro-hydrodynamic technique is electrospinning.

The terms "electrohydronamic", "aero-hydrodynamics" and "electrospinning", have been explained above in the previous aspect of the invention, and both of them and the preferred embodiments thereof are applicable to the present aspect of the invention.

In a more preferred embodiment of the elastomer material of the invention, the polymer is poly(ethylene oxide), and the elastomer material is obtained by electrospinning. Even more preferably, the elastomer material comprises poly(ethylene oxide), glycerol and Span 20, wherein the elastomer material is obtained by electrospinning.

Moreover, the elastomer material may be arranged in the form of fibres, in the form of yarns, in the form of a film, or in the form of a rubber or elastic band.

In a preferred embodiment, alone or in combination with the other preferred embodiments, the elastomer material is arranged in the form of fibres.

As already discussed in the previous aspect of the invention, fibres can be, but are not limited to, smooth or pearlescent. Thus, in a more preferred embodiment, the fibres are smooth fibres. In another more preferred embodiment, the fibres are pearlescent fibres.

In an even more preferred embodiment, alone or in combination with the other preferred embodiments, the size of the fibre is between 0.02 to 10 µm (including the extreme values of the range), and more preferably between 0.5 and 8 µm (including the extreme values of the range).

In another preferred embodiment, alone or in combination with the other preferred embodiments, the elastomer material of the invention is arranged in the form of yarns.

In another preferred embodiment, alone or in combination with the other preferred embodiments, the elastomer material of the invention is arranged in the form of a rubber or elastic band.

Moreover, the elastomer material of the invention exhibits interesting mechanical properties, which can be characterised according to the ASTM D638 standard method. The ASTM D638 standard method is carried out by applying a tensile force to a specimen and measuring various properties of the specimen under stress. This is carried out on a universal testing machine (also called a tensile testing machine), such as a universal testing machine (4400 Instron) or an AUTOGRAPH Table-Top universal precision testing machine (Shimadzu) at tensile speeds ranging from 0.001 to 5000 mm/min until the specimen fails (yields or breaks).

In a preferred embodiment, alone or in combination with the other preferred embodiments, the elastomer material of the invention comprises a Young's modulus of between 0.1 and 300 MPa (including the extreme values of the range), measured in accordance with ASTM D638 standard method. More preferably, the elastomer material of the invention has a Young's modulus of between 1 and 150 MPa (including the extreme values of the range), measured in accordance with ASTM D638 standard method.

In another preferred embodiment, alone or in combination with other preferred embodiments, the elastomer material of the invention comprises a Young's modulus of less than 90 MPa, measured in accordance with ASTM D638 standard method.

Even more preferably, the elastomer material of the invention comprises a Young's modulus of less than 20 MPa, measured in accordance with ASTM D638 standard method.

In another preferred embodiment, alone or in combination with the other preferred embodiments, when the elastomer material is arranged in the form of fibres, said material has a Young's modulus of between 1 and 90 MPa (including the extreme values of the range), more preferably less than 80 MPa, measured in accordance with ASTM D638 standard method.

In another preferred embodiment, alone or in combination with the other preferred embodiments, when the elastomer material is arranged in the form of yarns, said material has a Young's modulus of between 5 and 25 MPa (including the extreme values of the range), preferably a Young's modulus of less than 20 MPa, measured in accordance with ASTM D638 standard method.

In another preferred embodiment, alone or in combination with the other preferred embodiments, the elastomer material comprises an elongation at break having an elastic recovery behaviour between 100 and 10000% (including the extreme values of the range) measured according to ASTM D638 standard method. More preferably, the elastomer material has an elongation at break of between 300 and 5000% (including the extreme values of the range), measured in accordance with ASTM D638 standard method.

In another preferred embodiment, alone or in combination with the other preferred embodiments, the elastomer material comprises an elongation at break of more than 400%, measured in accordance with ASTM D638 standard method.

In another more preferred embodiment, alone or in combination with the other preferred embodiments, when the elastomer material is arranged in the form of yarns, the elastomer material has an elongation at break of more than 700%, measured in accordance with ASTM D638 standard method.

Furthermore, the elastomer material of the invention, can be obtained by means of the method of obtaining of the invention. Thus, another aspect of the invention relates to the elastomer material of the invention obtained by means of the method of obtaining of the invention, including any of the preferred embodiments thereof.

The terms used to define the elastomer material of the invention have been explained above in the previous aspect of the invention, and both of them and the preferred embodiments thereof may be applicable to the elastomer material of the invention.

### DESCRIPTION OF THE FIGURES

**Fig. 1****.** Morphology at macroscopic scale (a) and at microscopic scale (SEM image, Scanning Electron Microscope) (b) of electrospun fibres based on cashew gum and poly(ethylene oxide).
**Fig. 2****.** Elastomeric properties of electrospun fibres based on cashew gum and poly(ethylene oxide).

### EXAMPLES

Next, the invention will be illustrated by means of tests carried out by the inventors, which demonstrate the effectiveness of the method and product of the invention.

### Example 1: Electrospun cashew gum fibres

A solution based on cashew gum (CG) and poly(ethylene oxide) (PEO) with a total solids concentration of 15% (w/v) was prepared, with the CG:PEO ratio used being 85:15.

The cashew gum powder was first dissolved in distilled water for 48 hours at room temperature, with magnetic stirring, followed by centrifugation to remove suspended impurities. Next, the corresponding amount of PEO was added and left under magnetic stirring until completely dissolved. Span 20 was added as a surfactant at a concentration of 1% (w/v). Finally, glycerol was also added as a plasticiser at a concentration of 3.7% (w/v). The final solution was left under magnetic stirring for 3 hrs to ensure homogeneity.

### Electrospinning process

The electrospinning process was carried out with a high-performance Fluidnatek LE-500 (Bioinicia S.L.) with control of the environmental conditions, using a multi-injector system, with movement in the X-axis movement and with a rotary collector. The process parameters were: voltage of the injector 15 kV, voltage of the collector -20 kV; needle-collector distance of 24.5 cm; flow rate of 1 ml/min per needle (5-needle injector); injector speed of 50 mm/s. The process was carried out at a temperature of 40°C and 25% relative humidity (RH).

### Results

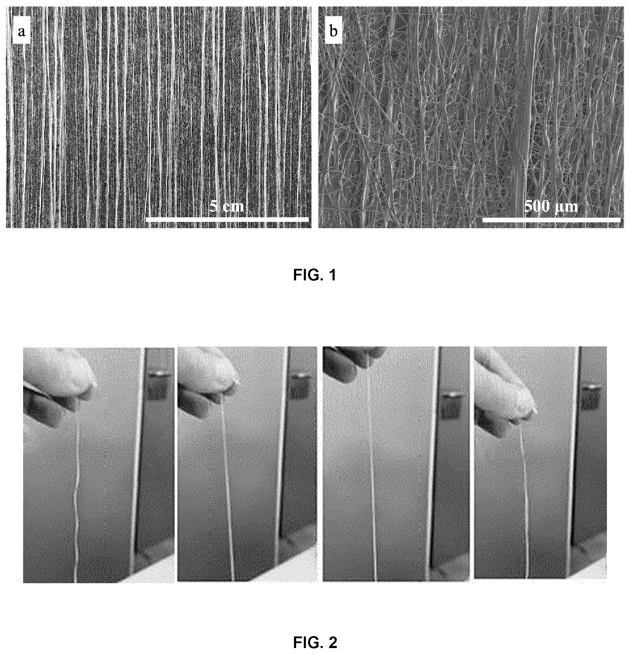

As can be seen in Fig. 1, the processing of the above formulation by electrospinning under the above-mentioned conditions, allowed the production of micrometric fibres, which are smooth and highly aligned. The average fibre size was 4.14 µm. The fibres produced here showed high extensibility and high elastic recovery, as shown in Fig. 2 and Table 1; the elastomeric properties together with the high degree of alignment meant that the electrospun fibres had an extremely attractive elastomeric behaviour and high strength in terms of mechanical properties.

Mechanical properties were characterised using a universal testing machine (4400 Instron) according to the ASTM D638 standard method. As can be seen in Table 1, the electrospun fibre mat showed high elongation at break (ε_{b}) and toughness (T), above 550% and 12 mJ/m³, respectively, and low Young's modulus (E), below 80 MPa.

**Table 1. Mechanical properties in terms of Young's modulus (E), breaking strength (σ_{b}), elongation at break (ε_{b}), and toughness (T) of the electrospun fibres.**

| Sample | E (MPa) | σ_{b} (MPa) | ε_{b} (%) | T (mJ/m³) |
|---|---|---|---|---|
| Electrospun fibres | 78 ± 23 | 3.7 ± 1.4 | 550 ± 57 | 12 ± 6 |

### Example 2. Yarn produced by electrospinning from cashew gum

A continuous strand made from a grouping of fibres is called a yarn. To obtain the fibre yarn, a solution based on cashew gum (CG) and poly(ethylene oxide) (PEO) with a total solids concentration of 15% (w/v) was prepared, with the CG:PEO ratio used being 85:15.

The cashew gum powder was first dissolved in distilled water for 48 hours at room temperature, with magnetic stirring, followed by centrifugation to remove suspended impurities. Next, the corresponding amount of PEO was added and left under magnetic stirring until completely dissolved. Span 20 was added as a surfactant at a concentration of 1% (w/v). Finally, glycerol was also added as a plasticiser at a concentration of 3.7% (w/v). The final solution was left under magnetic stirring for 3 hrs to ensure homogeneity.

The spinning process of electrospun fibres was carried out with a high-performance *in-situ* yarn-forming accessory from Bioinicia S.L. coupled to a Fluidnatek LE-500 electrospinning machine, also from Bioinicia S.L., with control of the environmental conditions of humidity and temperature.

In this equipment, the collector is a rotary plate with two opposite injection points and with opposite polarisation of 15 kV/-15kV that project electrospun fibres that form a cone of fibres from which the rotation of the plate causes them to intertwine and to be carried in yarn format to a reel that starts winding them. The process was carried out at a temperature of 35°C and 30% relative humidity (RH).

The yarn produced showed high extensibility and elastic recovery properties. The elastomeric properties together with the high degree of alignment, made the electrospun fibres have an extremely attractive elastomeric behaviour and high strength in terms of mechanical properties (Table 2).

As can be seen from the mechanical characterisation, the fibre yarns produced showed high elongation at break and toughness, over 700% and 14 mJ/m³, respectively, and a low Young's modulus (E), below 20 MPa. It can be concluded that the directional alignment of the fibres allowed for high elongation, the elongation being parallel to the direction of stress.

**Table 2. Mechanical properties in terms of Young's modulus (E), breaking strength (σ_{b}), elongation at break (ε_{b}), and toughness (T) of the yarns based on electrospun fibres.**

| Sample | E (MPa) | σ_{b} (MPa) | ε_{b} (%) | T (mJ/m³) |
|---|---|---|---|---|
| Yarn | 16 ± 4 | 2.7 ± 0.3 | 704 ± 98 | 14 ± 2 |

### Example 3: Gum arabic electrospun fibres

A solution based on gum arabic (AG) and poly(ethylene oxide) (PEO) with a total solids concentration of 13% (w/v) was prepared, with the AG:PEO ratio used being 85:15.

The gum arabic powder was first dissolved in distilled water for 48 hours at room temperature, with magnetic stirring. Next, the corresponding amount of PEO was added and left under magnetic stirring until completely dissolved. Span 20 was added as a surfactant at a concentration of 1% (w/v). Finally, glycerol was also added as a plasticiser at a concentration of 3.7% (w/v). The final solution was left under magnetic stirring for 3 hrs to ensure homogeneity.

### Electrospinning process

The electrospinning process was carried out with a high-performance Fluidnatek LE-500 (Bioinicia S.L.) with control of the environmental conditions, using a multi-injector system, with movement in the X-axis and with a flat collector. The process parameters were: voltage of the injector 8 kV, voltage of the collector -2 kV; needle-collector distance of 24.5 cm; flow rate of 2 ml/hour per needle; injector speed of 50 mm/s. The process was carried out at a temperature of 36°C and 27% relative humidity (RH).

### Results

The processing of the above formulation by electrospinning under the above-mentioned conditions, allowed the production of micrometric fibres, which are smooth and not aligned. The average fibre size was 1.41 µm. The fibres produced here showed high extensibility, but an almost non-existent elastic recovery.

### Example 4: Xanthan gum electrospun fibres

A solution based on xanthan gum (XG) and poly(ethylene oxide) (PEO) with a total solids concentration of 1% (w/v) was prepared, with the XG:PEO ratio used being 85:15.

The xanthan gum powder was first dissolved in distilled water for 48 hours at room temperature, with magnetic stirring. Next, the corresponding amount of PEO was added and left under magnetic stirring until completely dissolved. Span 20 was added as a surfactant at a concentration of 1% (w/v). Finally, glycerol was also added as a plasticiser at a concentration of 3.7% (w/v). The final solution was left under magnetic stirring for 3 hrs to ensure homogeneity.

### Electrospinning process

The electrospinning process was carried out with a high-performance Fluidnatek **LE-**500 (Bioinicia S.L.) with control of the environmental conditions, using a multi-injector system, with movement in the X-axis and with a flat collector. The process parameters were: voltage of the injector 8 kV, voltage of the collector -2 kV; needle-collector distance of 24.5 cm; flow rate of 2 ml/hour per needle; injector speed of 50 mm/s. The process was carried out at a temperature of 36°C and 27% relative humidity (RH).

### Results

The processing of the above formulation by electrospinning under the above-mentioned conditions, did not allow the production of fibres.

## Claims

1. A method for obtaining an elastomer material, comprising the following steps:
(a) preparing a mixture comprising cashew gum at a concentration between 0.01 and 99% w/v and, at least, one polymer, wherein the concentration of said polymer is between 0.01 and 80% w/v, preferably wherein said polymer is an ethylene polymer; and
(b) subjecting the mixture prepared in step (a) to an electro-hydrodynamic and/or aero-hydrodynamic process, obtaining an elastomer material.

2. The method according to claim 1, wherein the electro-hydrodynamic process is electrospinning.

3. The method according to claim 2, wherein the electrospinning process comprises a voltage in the emitter between 0.01 kV and 500 kV, and a voltage in the collector between 0.01 kV and -500 kV.

4. The method according to claim 2 or 3, wherein the electrospinning process is carried out at a temperature between 1°C and 100°C, preferably at a temperature between 20°C and 45°C.

5. The method according to any one of claims 2 to 4, wherein the electrospinning process is carried out at a relative humidity between 1 and 90%, preferably at a relative humidity below 40%.

6. The method according to any one of claims 1 to 5, wherein the polymer is an ethylene polymer selected from the list consisting of: polyethylene, propylene, poly(ethylene oxide), polyethylene-co-vinyl acetate, polyethylene terephthalate and any copolymer thereof.

7. The method according to claim 6, wherein the ethylene polymer is poly(ethylene oxide).

8. The method according to any one of claims 1 to 7, wherein the ratio of cashew gum:ethylene polymer in the mixture is between 90:10 and 80:20.

9. The method according to any one of claims 1 to 8, wherein the mixture of step a) further comprises, at least, a plasticiser.

10. The method according to claim 9, wherein the plasticiser is selected from the list consisting of: glycerol, acetylated monoglycerides, triethyl citrate (TEC), trioctyl citrate (TOC), trihexyl citrate (THC), acetyl tributyl citrate (ATBC), deep eutectic solvent (DES), natural deep eutectic solvent (NADES) and any combination thereof.

11. The method according to claim 10, wherein the plasticiser is glycerol and wherein the concentration thereof is between 0.01 % and 7 % w/v.

12. The method according to any one of claims 1 to 11, wherein the mixture prepared in step a) further comprises, at least, an additive selected from the list consisting of: Span, preferably Span 20, Tween, TEGO, polyvinylpyrrolidone, polyglycerol, polyricinoleate, polyvinyl alcohol, CTAB (cetyltrimethylammonium bromide), hexadecyltrimethylammonium bromide (HDTMAB), Triton (t-octylphenoxypolyethoxyethanol), Lauryl betaine, Pluronic (poloxamers), p-phenylenediamines, quinolines, phenols, henna, phthalocyanine, quinacridones, dioxazines, isoindolines, perylenes, flavantrones, anthraquinones, carbon black, titanium dioxide, magnetite, calcium carbonate, silica, carbon nanotube, and any combination thereof.

13. The method according to claim 12, wherein the additive is Span 20 and wherein the concentration thereof is less than 5% w/v.

14. The method according to any one of claims 1 to 13, further comprising a step c) of post-processing of the elastomer material obtained in step b).

15. The method according to claim 14, wherein the post-processing step comprises subjecting the elastomer material obtained in step b) to a calendering or heat treatment process with contact or without contact, preferably wherein said process is carried out at a temperature of between 0 and 200°C, obtaining an elastomer material in the form of fibres.

16. The method according to claim 15, wherein the calendering or heat treatment process with contact or without contact is carried out at a temperature between 10 and 90°C.

17. The method according to claim 15 or 16, wherein the calendering or heat treatment process with contact or without contact is carried out at a speed between 0.001 to 100,000 rpm.

18. The method according to claim 14, wherein the post-processing step comprises subjecting the elastomer material obtained in step b) to a spinning technique selected from the list consisting of: ring spinning, rotor spinning, twistless spinning, wrap spinning, core spinning, wet electrospinning coupled to a winding roller, centrifugal electrospinning, yarn production using a funnel-shaped collector and any combination thereof, preferably wherein the spinning technique is carried out *in situ* during the formation of the elastomer material in step b), or it is carried out off-line, obtaining an elastomer material in the form of yarns.

19. The method according to claim 18, wherein the post-processing step comprises subjecting the elastomer material obtained in step b), preferably obtained by electrospinning, to an *in-situ* coupled yarn.

20. The method according to claim 19, wherein the electro-hydrodynamic process, preferably electrospinning, by which the elastomer material is obtained in step b), is coupled to the spinning technique comprising the use of a system of two or more nozzles and a rotary collection system, obtaining an elastomer material in the form of a yarn.

21. The method according to claim 14, wherein the post-processing step comprises subjecting the elastomer material obtained in step b) to heat treatment and cutting, preferably wherein the heat treatment comprises annealing treatment, obtaining an elastomer material in the form of a rubber or elastic band.

22. The method according to claim 14, wherein the post-processing step comprises subjecting the elastomer material obtained in step b) to a spinning technique followed by braiding and heat treatment, preferably wherein the heat treatment comprises annealing treatment, obtaining an elastomer material in the form of a rubber or elastic band.

23. An elastomer material comprising cashew gum and, at least, one polymer, preferably wherein said polymer is an ethylene polymer.

24. The elastomer material according to claim 23, wherein the elastomer material is obtained by an electro-hydrodynamic and/or aero-hydrodynamic technique.

25. The elastomer material according to claim 24, wherein the electro-hydrodynamic technique is electrospinning.

26. The elastomer material according to any one of claims 23 to 25, wherein the polymer is an ethylene polymer selected from the list consisting of: polyethylene, propylene, poly(ethylene oxide), polyethylene-co-vinyl acetate, polyethylene terephthalate and any copolymer thereof.

27. The elastomer material according to claim 26, wherein the ethylene polymer is poly(ethylene oxide).

28. The elastomer material according to any one of claims 23 to 27, wherein the elastomer material comprises a Young's modulus of less than 20 MPa, measured in accordance with ASTM D638 standard method.

29. The elastomer material according to any one of claims 23 to 28, wherein the elastomer material comprises an elongation at break greater than 400%, measured in accordance with ASTM D638 standard method.

30. The elastomer material according to any one of claims 23 to 29, which further comprises, at least, an additive selected from the list consisting of: Span, preferably Span 20, Tween, TEGO, polyvinylpyrrolidone, polyglycerol, polyricinoleate, polyvinyl alcohol, CTAB (cetyltrimethylammonium bromide), hexadecyltrimethylammonium bromide (HDTMAB), Triton (t-octylphenoxypolyethoxyethanol), Lauryl betaine, Pluronic (polaxomers), acetylated monoglycerides, triethyl citrate (TEC), trioctyl citrate (TOC), trihexyl citrate (THC), acetyl tributyl citrate (ATBC), glycerol, deep eutectic solvent (DES), natural deep eutectic solvent (NADES), p-phenylenediamines, quinolines, phenols, henna, phthalocyanine, quinacridones, dioxazines, isoindolines, perylenes, flavantrones, anthraquinones, carbon black, titanium dioxide, magnetite, calcium carbonate, silica, carbon nanotube, and any combination thereof.

31. The elastomer material according to claim 30, comprising two additives, wherein the additives are Span, preferably Span 20, and glycerol.

32. The elastomer material according to any one of claims 23 to 31, wherein the elastomer material is arranged in the form of fibres.

33. The elastomer material according to claim 32, wherein the size of the fibres is between 0.02 to 10 µm, preferably between 0.5 and 8 µm.

34. The elastomer material according to any one of claims 23 to 31, wherein the elastomer material is arranged in the form of yarns.

35. The elastomer material according to any one of claims 23 to 31, wherein the elastomer material is arranged in the form of a rubber or elastic band.

36. An elastomer material obtained by the method of obtaining according to any one of claims 1 to 22.
